# EUROPEAN PATENT SPECIFICATION

(11) **EP 3 854 851 B1**
(45) Date of publication and mention of the grant of the patent: **03.01.2024**
(21) Application number: 19862151.8
(22) Date of filing: 18.09.2019
(51) Int. Cl.: C08L 67/06, B32B 15/09, B32B 27/36

(54) **SINGLE-LAYER POLYESTER THIN FILM AND COATED METAL PLATE**
EINLAGIGE POLYESTERDÜNNSCHICHT UND BESCHICHTETE METALLPLATTE
FILM MINCE DE POLYESTER MONOCOUCHE ET PLAQUE MÉTALLIQUE REVÊTUE

(30) Priority: 19.09.2018 CN 201811090612
(43) Date of publication of application: 28.07.2021
(73) Proprietor: BAOSHAN IRON & STEEL CO., LTD., Shanghai 201900 (CN)
(72) Inventor: XIE, Long, Shanghai 201900 (CN); CHEN, Hongxing, Shanghai 201900 (CN); DAI, Jingge, Shanghai 201900 (CN)
(74) Representative: Kuhnen & Wacker Patent- und Rechtsanwaltsbüro PartG mbB
(86) International application number: PCT/CN2019/106468
(87) International publication number: WO 2020/057554

(56) References cited:
- EP-A1- 1 262 523
- CN-A- 1 616 518
- CN-A- 1 616 518
- CN-A- 102 070 882
- CN-A- 102 432 984
- CN-A- 103 387 660
- CN-A- 105 985 612
- CN-B- 105 985 612
- US-A1- 2011 008 635

## Description

### Technical Field

The present invention relates to the field of film-laminated metal plates for metal packaging of food, and more particularly to a monolayer polyester film and a film-laminated metal plate.

### Background Art

Coatings containing bisphenol A are widely used in the metal canmaking industry. In recent years, as the environmental protection, energy consumption and food safety issues have gradually attracted worldwide concern, the community of the industry has been committed to developing qualified new materials to address the above challenges.

Film-laminated steel is a new material obtained by directly bonding a flexible polyester film to a metal plate together by a hot melt lamination. This new material brings many advantages to downstream users: 1. it eliminates the step of applying a coating, and realizes the environmental friendliness of the process; 2. the food safety level is promoted significantly as compared with coated steel; 3. the overall performance is improved greatly as compared with coated steel; and 4. continuous forming and processing of cans/lids can be realized.

As environmental protection policies become more and more stringent and people's concern about food safety increases, the film-laminated steel has attracted more and more attention as a new environmentally friendly high-performance material in the canmaking industry due to the abovementioned various advantages of the film-laminated steel. In recent years, the film-laminated steel products of some companies have been marketed. In order to meet the differentiated needs of different uses, the design of the raw materials and film structure of the polyester film needs to be optimized to meet the different requirements of the downstream processes.

CN 102 463 725 A discloses a polyester film and a method of preparing the same. The polyester film of this patent application has a three-layer (ABA) structure, and is used in the field of electronic tags. The film structure is characterized by the same resin material for two skin layers. Hence, it is difficult to meet the various performance requirements such as bonding with a metal plate, contact with a mold for molding, contact with the contents of a container, etc., which easily leads to difficulties in balancing performances, not suitable for the canmaking industry.

CN 106 142 782 B discloses a polyester film for thermal lamination on steel and a method of preparing the same. This patent is characterized by lamination of a polyester film having a three-layer structure on a metal sheet. Because the performance of the film is limited by the high crystallinity of the lower skin layer, its processability and formability are not sufficient, and thus it is not suitable for uses involving deep drawing and complex deformation.

CN 1 839 036 A discloses a film-laminated metal plate and a drawn can using the same. This patent uses a double-layer film for lamination on a thin metal plate. Defects such as delamination and spalling occur easily during the canmaking process. A vinyl ionomer is used as an intermediate bonding layer which has poor performance during filling and high temperature sterilization.

CN 102 432 984 A discloses a cast polyester film and a metal plate and a metal can using the same. This patent uses a monolayer polyester film for lamination on a metal sheet. The single modifying monomer in the polyester is not conducive to improving the overall performance of the polyester film. Moreover, the raw material synthesis and film preparation process in this patent are not conducive to promoting the food safety level of the film.

CN 105 985 612 A discloses a polyester thin film used for being directly thermal-compounded with a metal surface and a preparation method of the same. The polyester thin film is prepared by copolymerizing terephthalic acid, isophthalic acid, ethylene glycol and a fourth component and bidirectionally stretching the co-polymer, wherein the molar ratio of the terephthalic acid, the ethylene glycol, the isophthalic acid to the fourth component is 135-165:148-194:11-15:0.01-12. The fourth component is selected from one or more of isophthalic-5-sulfonate, 1,4-cyclohexane dimethanol, neo-pentanediol and trimellitic acid.

CN 1 616 518 A discloses a production process of nano composite silica/polyester material includes the following steps: coating nano silica as crystallizing nucleartor with organic matter for surface modification to make it capable of distribute well in ethylene glycol as one monomer for polyester; high temperature pre-treating compounded nano silica/ethylene glycol slurry to make nano silica possess average size smaller than 100 nm; and polymerization or copolymerization between nano silica/ethylene glycol slurry and other monomer for polyester inside reactor to obtain in-situ nano composite silica/polyester material.

EP 1 262 523 A1 discloses a copolymerized polyester resin composition comprising the following polyethylene terephthalate resin and a polybutylene terephthalate resin.

A film-laminated metal plate needs to have sufficient guarantee of food safety. At the same time, it also needs to meet the requirements of deep drawing, resistance to acids, bases and salts to be canned, high temperature sterilization, etc. In the prior art, only one or two of the above performance requirements can be met. However, as the high-end requirements of the food or beverage packaging industry, the above three requirements must be met at the same time.

### Summary

An object of the present invention is to provide a monolayer polyester film and a film-laminated metal plate using the monolayer polyester film. The film-laminated metal plate has an attribute of high-level food safety, excellent endurance in deep drawing processing and complex deformation processing, excellent corrosion resistance and many other advantages. It can be widely used in the container industry for medium-end to high-end food or beverage packaging.

In order to achieve the above object, the following technical solution is adopted according to the present invention.

According to one aspect of the present invention, there is provided a copolyester, wherein the copolyester is a PET polyester modified by copolymerization of isophthalic acid, 1,4-cyclohexanedimethanol and neopentyl glycol, and comprises 800-2000ppm by mass of SiO₂. The SiO₂ is added by in-situ polymerization.

The copolyester according to one aspect of the present invention has a melting point of 200-240°C, preferably 210-230°C.

The copolyester according to one aspect of the present invention has an intrinsic viscosity of 0.68-0.72 dL/g.

The copolyester according to one aspect of the present invention has an intrinsic viscosity of 0.75-0.78 dL/g after solid phase tackification.

According to one aspect of the present invention, there is provided a polyester film comprising the copolyester described in any of the embodiments herein. Preferably, the polyester film comprises the copolyester described in any of the embodiments herein in a monolayer structure. Preferably, the monolayer structure is prepared by a biaxial stretching process or a casting process.

The polyester film according to one aspect of the present invention is a monolayer structure prepared from a specific copolyester chip by a biaxial stretching process or a casting process, wherein the specific copolyester comprises 1200 ppm by mass of SiO₂ added by in-situ polymerization, and the specific copolyester is a PET polyester modified by copolymerization of isophthalic acid, 1,4-cyclohexanedimethanol and neopentyl glycol.

In the polyester film according to one aspect of the present invention, the specific copolyester has a melting point of 200-240°C.

Preferably, the specific copolyester has a melting point of 210-230°C.

In the polyester film according to one aspect of the present invention, the specific copolyester has an intrinsic viscosity of 0.68-0.72 dL/g, and an intrinsic viscosity of 0.75-0.78 dL/g after solid phase tackification.

According to another aspect of the present invention, there is provided a film-laminated metal plate, wherein the film-laminated metal plate comprises a metal substrate and the polyester film described in any of the embodiments herein.

In the film-laminated metal plate according to another aspect of the present invention, the polyester film is directly laminated on a surface of the metal substrate by hot melt lamination.

In the film-laminated metal plate according to another aspect of the present invention, the metal substrate is selected from the group consisting of a chromium-plated steel plate, a tin-plated steel plate, a low-tin steel plate, a galvanized steel plate, a cold-rolled steel plate, a stainless steel plate, and an aluminum plate.

According to still another aspect of the present invention, there is provided a metal container for medium-end to high-end food or beverage packaging, wherein the metal container is made of the film-laminated metal plate described in any of the embodiments herein.

Compared with the prior art, the present invention has the following beneficial technical effects: the polyester film and the film-laminated metal plate according to the present invention have the following three characteristics at the same time: the polyester film has an attribute of high-level food safety, endurance in deep drawing processing and complex deformation processing, and excellent corrosion resistance, widely useful in the medium-end to high-end metal packaging industry.

Due to the addition of SiO₂ to the polymer in the in-situ polymerization, the crystallization properties of the polyester film are improved uniformly on the whole. By substituting the traditional way of adding SiO₂ in the form of master batch, addition of a high melting point resin to the film is avoided. The above two points have improved the overall performance of the polyester film significantly, and the complex processing endurance and corrosion resistance of the film-laminated steel comprising the film of the present invention have been improved notably.

### Detailed Description

There is provided a copolyester, wherein the copolyester is a PET polyester modified by copolymerization of isophthalic acid, 1,4-cyclohexanedimethanol and neopentyl glycol, and comprises 800-2000ppm by mass of SiO₂. The SiO₂ is added by in-situ polymerization. Preferably, SiO₂ in the copolyester has a conent of 1000-1500 ppm by mass, preferably 1200 ppm by mass. The term "added by in-situ polymerization" or the like as used herein refers to mixing SiO₂ with the monomers for synthesizing the copolyester (i.e., terephthalic acid, ethylene glycol, isophthalic acid, 1,4-cyclohexanedimethanol and neopentyl glycol), and then polymerizing to produce the copolyester according to the present invention. A conventional process for preparing PET polyester may be used to prepare the copolyester of the present invention. Preferably, the copolyester of the present invention has a melting point of 200-240°C, preferably 210-230°C. Preferably, the copolyester of the present invention has an intrinsic viscosity of 0.68-0.72 dL/g. Preferably, the copolyester of the present invention has an intrinsic viscosity of 0.75-0.78 dL/g after solid phase tackification.

In the present invention, the intrinsic viscosity is measured using a technique commonly used in the art.

The copolyester of the present invention can be used to manufacture a polyester film. In one embodiment of the present invention, the polyester film of the present invention has a monolayer structure comprising the copolyester described in any of the embodiments herein. In a particularly preferred embodiment, the copolyester comprises 1200 ppm by mass of SiO₂. Preferably, the polyester film of the present invention is prepared from a chip of the copolyester by a biaxial stretching process or a casting process.

There is further provided a film-laminated metal plate according to the present invention, wherein the film-laminated metal plate comprises a metal substrate and the polyester film described in any of the embodiments herein. In a preferred embodiment, the polyester film is directly laminated on a surface of the metal substrate by hot melt lamination. The metal substrate of the present invention is selected from the group consisting of a chromium-plated steel plate, a tin-plated steel plate, a low-tin steel plate (a tin coating weight of ≤1.1 g/m²), a galvanized steel plate, a cold-rolled steel plate, a stainless steel plate and an aluminum plate.

There is still further provided a metal container for medium-end to high-end food or beverage packaging according to the present invention, wherein the metal container is made of the film-laminated metal plate described in any of the embodiments herein.

In the following detailed description, the objectives, features, and advantages of the present invention will become clearer and more apparent with reference to the nonlimiting examples. The content is sufficient to enable those skilled in the art to appreciate and implement the present invention.

### Example 1

In the method of producing a film-laminated steel using a monolayer polyester film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 1200 ppm SiO₂ and having an intrinsic viscosity of 0.72 dL/g, and then obtain the specific copolyester having an intrinsic viscosity of 0.78 dL/g by solid phase tackyfication and a melting point of 220°C.

The specific copolyester chip was used to prepare a monolayer polyester film by a biaxial stretching process at a manufacturing temperature of 260-270°C.

Preparation of a film-laminated metal plate: the biaxially stretched polyester film thus prepared was thermally bonded to a surface of a thin metal plate having a thickness of 0.10-0.50 mm at a pressure of 2-10 kg and a temperature of 180-260 °C to obtain a film-laminated metal plate.

This Example provided a polyester film which was a monolayer structure prepared from a specific copolyester chip by a biaxial stretching process, wherein the specific copolyester comprised 1200 ppm by mass of SiO₂ added by in-situ polymerization, and the specific copolyester was a PET polyester modified by copolymerization of isophthalic acid, 1,4-cyclohexanedimethanol and neopentyl glycol.

The melting point of the specific copolyester was 220°C.

The intrinsic viscosity of the specific copolyester was 0.78 dL/g.

### Example 2

In the method of producing a monolayer copolyester steel-laminating film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 1200 ppm SiO₂ and having an intrinsic viscosity of 0.68 dL/g, and then obtain the specific copolyester having an intrinsic viscosity of 0.75 dL/g by solid phase tackyfication and a melting point of 200 °C.

The specific copolyester chip was used to prepare a monolayer polyester film by a biaxial stretching process at a manufacturing temperature of 250-270°C.

Preparation of a film-laminated metal plate: the biaxially stretched polyester film thus prepared was thermally bonded to a surface of a thin metal plate having a thickness of 0.10-0.50 mm at a pressure of 2-10 kg and a temperature of 180-260 °C to obtain a film-laminated metal plate.

This Example provided a polyester film which was a monolayer structure prepared from a specific copolyester chip by a biaxial stretching process, wherein the specific copolyester comprised 1200 ppm by mass of SiO₂ added by in-situ polymerization, and the specific copolyester was a PET polyester modified by copolymerization of isophthalic acid, 1,4-cyclohexanedimethanol and neopentyl glycol.

The melting point of the specific copolyester was 200°C.

The intrinsic viscosity of the specific copolyester was 0.75 dL/g.

### Example 3

In the method of producing a monolayer copolyester steel-laminating film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 1200 ppm SiO₂ and having an intrinsic viscosity of 0.72 dL/g, and then obtain the specific copolyester having an intrinsic viscosity of 0.78 dL/g by solid phase tackyfication and a melting point of 230°C.

The specific copolyester chip was used to prepare a monolayer polyester film by a biaxial stretching process at a manufacturing temperature of 260-280°C.

The method of preparing the film-laminated steel is the same as Example 1.

This Example provided a polyester film which was a monolayer structure prepared from a specific copolyester chip by a biaxial stretching process, wherein the specific copolyester comprised 1200 ppm by mass of SiO₂ added by in-situ polymerization, and the specific copolyester was a PET polyester modified by copolymerization of isophthalic acid, 1,4-cyclohexanedimethanol and neopentyl glycol.

The melting point of the specific copolyester was 230°C.

The intrinsic viscosity of the specific copolyester was 0.78 dL/g.

### Example 4

In the method of producing a monolayer copolyester steel-laminating film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 1200 ppm SiO₂ and having an intrinsic viscosity of 0.72 dL/g, and then obtain the specific copolyester having an intrinsic viscosity of 0.78 dL/g by solid phase tackyfication and a melting point of 230°C.

The specific copolyester chip was used to prepare a monolayer polyester film by a casting process at a manufacturing temperature of 260-280°C.

The method of preparing the film-laminated steel is the same as Example 1.

This Example provided a polyester film which was a monolayer structure prepared from a specific copolyester chip by a casting process, wherein the specific copolyester comprised 1200 ppm by mass of SiO₂ added by in-situ polymerization, and the specific copolyester was a PET polyester modified by copolymerization of isophthalic acid, 1,4-cyclohexanedimethanol and neopentyl glycol.

The melting point of the specific copolyester was 230°C.

The intrinsic viscosity of the specific copolyester was 0.78 dL/g.

### Example 5

In the method of producing a monolayer copolyester steel-laminating film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 1200 ppm SiO₂ and having an intrinsic viscosity of 0.68 dL/g, and then obtain the specific copolyester having an intrinsic viscosity of 0.75 dL/g by solid phase tackyfication and a melting point of 200°C.

The specific copolyester chip was used to prepare a monolayer polyester film by a casting process at a manufacturing temperature of 250-270°C.

The method of preparing the film-laminated steel is the same as Example 1.

This Example provided a polyester film which was a monolayer structure prepared from a specific copolyester chip by a casting process, wherein the specific copolyester comprised 1200 ppm by mass of SiO₂ added by in-situ polymerization, and the specific copolyester was a PET polyester modified by copolymerization of isophthalic acid, 1,4-cyclohexanedimethanol and neopentyl glycol.

The melting point of the specific copolyester was 200°C.

The intrinsic viscosity of the specific copolyester was 0.75 dL/g.

### Example 6

In the method of producing a monolayer copolyester steel-laminating film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 1200 ppm SiO₂ and having an intrinsic viscosity of 0.72 dL/g, and then obtain the specific copolyester having an intrinsic viscosity of 0.78 dL/g by solid phase tackyfication and a melting point of 240°C.

The method of preparing the film-laminated steel is the same as Example 1.

The specific copolyester chip was used to prepare a monolayer polyester film by a casting process at a manufacturing temperature of 260-270°C.

The method of preparing the film-laminated steel is the same as Example 1.

This Example provided a polyester film which was a monolayer structure prepared from a specific copolyester chip by a casting process, wherein the specific copolyester comprised 1200 ppm by mass of SiO₂ added by in-situ polymerization, and the specific copolyester was a PET polyester modified by copolymerization of isophthalic acid, 1,4-cyclohexanedimethanol and neopentyl glycol.

The melting point of the specific copolyester was 240°C.

The intrinsic viscosity of the specific copolyester was 0.78 dL/g.

### Example 7

In the method of producing a monolayer copolyester steel-laminating film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 800 ppm SiO₂ and having an intrinsic viscosity of 0.70 dL/g, and then obtain the specific copolyester having an intrinsic viscosity of 0.76 dL/g by solid phase tackyfication and a melting point of 230°C.

The specific copolyester chip was used to prepare a monolayer polyester film by a casting process at a manufacturing temperature of 260-270°C.

The method of preparing the film-laminated steel is the same as Example 1.

### Example 8

In the method of producing a monolayer copolyester steel-laminating film, the polyester film was prepared by using a specific copolyester chip.

The specific copolyester chip: isophthalic acid, 1,4-cyclohexanedimethanol and neopentyl glycol were introduced into a system comprising terephthalic acid and ethylene glycol as the main raw materials to carry out copolymerization. In the copolymerization, SiO₂ was added by in-situ polymerization to obtain a copolyester resin comprising 2000 ppm SiO₂ and having an intrinsic viscosity of 0.72 dL/g, and then obtain the specific copolyester having an intrinsic viscosity of 0.76 dL/g by solid phase tackyfication and a melting point of 220°C.

The specific copolyester chip was used to prepare a monolayer polyester film by a casting process at a manufacturing temperature of 260-270°C.

The method of preparing the film-laminated steel is the same as Example 1.

### Comparative Example 1

A PET resin modified by IPA and having a melting point of 210°C and a viscosity of 0.65 dL/g was made into a monolayer polyester film by a casting process. A silicon-containing chip comprising 30000 ppm SiO₂ was added to one side of the film, so that one side of the monolayer polyester film comprised 1800 ppm SiO₂ to achieve the effect of an anti-blocking agent.

Preparation of film-laminated steel: the polyester film prepared by the casting process was thermally bonded to the surface of a 0.19 mm chromium-plated steel plate at a pressure of 2-10 kg and a temperature of 180-260°C to obtain the film-laminated steel.

### Comparative Example 2

In a three-layer composite film, the upper layer resin was a 3 µm PET resin, the intermediate layer was a 14 µm blended resin of 265°C PET and 210°C PET (having a blending ratio of 7:3), and the lower layer was a 3 µm modified PET resin having a melting point of 210°C.

Preparation of film-laminated steel: the prepared biaxial stretched polyester film was thermally bonded to the surface of a 0.19 mm chromium-plated steel plate at a pressure of 2-10 kg and a temperature of 180-260°C to obtain the film-laminated steel, wherein the lower layer was thermally laminated on the steel plate.

### Comparative Example 3

In a three-layer composite film having an ABA structure, the upper layer resin was a modified PET resin having a melting point of 210°C, the intermediate layer was a PET resin having a melting point of 265°C, and the lower layer was a modified PET resin having a melting point of 210°C. The thickness ratio of the three layers was 1:8:1.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Comparative Example 4

A two-layer composite film was prepared using a vinyl ionomer as an intermediate bonding layer.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Test Example

The film-laminated metal plates obtained in Examples 1-8 and Comparative Examples 1-4 were processed using the Draw and Redraw process (DRD) under the following processing conditions. They were formed into can bodies by punching three times. The 20 µm functional film prepared was located on both the inner and outer sides of the cans at the same time.

### Processing conditions (draw and redraw process)

1.Blank diameter: 172mm.
2.First-pass processing conditions
Punch diameter: 114.5mm;
Die clearance: 0.36mm;
Blank holder force: 4000kg;
Mold assembly temperature before molding: 55°C.
3.Second-pass processing conditions
Punch diameter: 88mm;
Die clearance: 0.4mm;
Blank holder force: 3000kg;
Mold assembly temperature before molding: 55°C.
4.Third-pass processing conditions
Punch diameter: 65.3mm;
Die clearance: 0.43mm;
Blank holder force: 2000kg;
Mold assembly temperature before molding: 55°C.

After molding, conventional processes in can making were used for necking and flanging.

The cans prepared by the above methods were evaluated by the methods described below. The results are shown in Tables 1 and 2.
(1) Endurance in deep drawing canmaking
   The resin film layer laminated on the steel plate surface was visually evaluated to see whether it was peeled off or not during the processing steps of the DRD can prepared under the abovementioned forming and processing conditions. The result where no peeling occurred till the final step is excellent.
(2) Acid resistance performance: After the film-laminated steel was punched into a can (can size 691), acid resistance performance evaluation was performed to represent corrosion resistance performance evaluation. The film-laminated can was filled with a 20 g/L citric acid solution. After the can was capped, the solution was boiled at 121°C for 60 min. After cooling, the sample was taken out, and spots corroded by the acid on the surface of the sample were observed to evaluate the acid resistance performance of the film-laminated steel.
(3) Sulfur resistance performance: After the film-laminated steel was punched into a can (can size 691), sulfur resistance performance evaluation was performed to represent corrosion resistance performance evaluation. The film-laminated can was filled with a 1% Na₂S solution. After the can was capped, the solution was boiled at 121°C for 60 min. After cooling, the sample was taken out, and sulfide spots on the surface of the sample were observed to evaluate the sulfur resistance performance of the film-laminated steel.
(4) Food safety: According to European Union Regulation EU No. 10/2011, with reference to EN 1186: Part 2, Part 3, Part 14, the total migration amounts of the film-laminated steel products were measured. A 10 cm* 10cm film-laminated steel plate sample was taken for measurement of the total migration amount in a relevant simulation solution. The food safety was evaluated based on the test result of the total migration amount of each film-laminated steel plate sample. The less the total migration amount, the higher the food safety.

**Table 1: Evaluation results of food safety**

| Test Item | Test Conditions | | |
|---|---|---|---|
| | 3% acetic acid 100 °C, 2 hours | 95 ethanol 60 °C, 3.5 hours | Isooctane 60 °C, 1.5 hours |
| Example 1 | Excellent | Excellent | Excellent |
| Example 2 | Excellent | Excellent | Excellent |
| Example 3 | Excellent | Excellent | Excellent |
| Example 4 | Excellent | Excellent | Excellent |
| Example 5 | Excellent | Excellent | Excellent |
| Example 6 | Excellent | Excellent | Excellent |
| Example 7 | Excellent | Excellent | Excellent |
| Example 8 | Excellent | Excellent | Excellent |
| Comparative Example 1 | Good | Good | Good |
| Comparative Example 2 | Good | Good | Good |
| Comparative Example 3 | Good | Good | Good |
| Comparative Example 4 | Poor | Poor | Poor |

**Table 2: Evaluation results of deep drawing endurance and corrosion resistance**

| Test Item | Deep Drawing Endurance | Acid Resistance | Sulfur Resistance |
|---|---|---|---|
| Example 1 | ⊚ | ⊚ | ⊚ |
| Example 2 | ⊚ | ⊚ | ⊚ |
| Example 3 | ⊚ | ⊚ | ⊚ |
| Example 4 | ⊚ | ⊚ | ⊚ |
| Example 5 | ⊚ | ⊚ | ⊚ |
| Example 6 | ⊚ | ⊚ | ⊚ |
| Example 7 | ⊚ | ⊚ | ○ |
| Example 8 | ⊚ | ⊚ | ⊚ |
| Comparative Example 1 | × | - | - |
| Comparative Example 2 | × | - | - |
| Comparative Example 3 | | | |
| Comparative Example 4 | ○ | ○ | Δ |

| | | | |
|---|---|---|---|
| Note: in Table 1, × means poor; △ means mediocre; ∘ means good; ⊚ means very good; - means unable to be evaluated. | | | |

In the above eight Examples, the monolayer polyester films prepared from the specific copolyester chips all exhibit good formability in both the casting process and the biaxial stretching process for making films, and the polyester steel-laminating films having a small thickness can be prepared. The polyester films have many advantages, such as high food safety, excellent endurance in deep drawing processing and complex deformation processing, and excellent corrosion resistance, widely useful in the medium-end to high-end metal packaging industry.

Due to the addition of SiO₂ to the polymer in the in-situ polymerization, the crystallization properties of the polyester film are improved uniformly on the whole. By substituting the traditional way of adding SiO₂ in the form of master batch, addition of a high melting point resin to the film is avoided. The above two points have improved the overall performance of the polyester film significantly, and the complex processing endurance and corrosion resistance of the film-laminated steel comprising the film of the present invention have been improved notably.

Finally, it should be pointed out that although the present invention has been described with reference to the specific examples, those skilled in the art should appreciate that the above examples are only used to illustrate the present invention, and are not used to limit the present invention. Various equivalent changes or substitutions can be made without departing from the concept of the present invention as defined in the appendant claims.

## Claims

1. A copolyester, wherein the copolyester is a PET polyester modified by copolymerization of isophthalic acid, 1,4-cyclohexanedimethanol and neopentyl glycol, and comprises 800-2000ppm by mass of SiO2 added by in-situ polymerization.

2. The copolyester according to claim 1, wherein the copolyester has a melting point of 200-240°C.

3. The copolyester according to claim 2, wherein the copolyester has a melting point of 210-230°C.

4. The copolyester according to claim 1, wherein the copolyester has an intrinsic viscosity of 0.68-0.72 dL/g, and/or an intrinsic viscosity of 0.75-0.78dL/g after solid phase tackification.

5. A polyester film, wherein the polyester film comprises the copolyester according to claim 1.

6. The polyester film according to claim 5, wherein the polyester film is a monolayer structure prepared from a specific copolyester chip, wherein the specific copolyester comprises 1200 ppm by mass of SiO2 added by in-situ polymerization, wherein the specific copolyester is a PET polyester modified by copolymerization of isophthalic acid, 1,4-cyclohexanedimethanol and neopentyl glycol.

7. The polyester film according to claim 6, wherein the specific copolyester has a melting point of 200-240°C.

8. The polyester film according to claim 7, wherein the specific copolyester has a melting point of 210-230°C.

9. The polyester film according to claim 6, wherein the specific copolyester has an intrinsic viscosity of 0.68-0.72 dL/g, and/or an intrinsic viscosity of 0.75-0.78dL/g after solid phase tackification.

10. A method of preparing the polyester film according to claim 5, wherein the method comprises preparing the polyester film from the copolyester by a biaxial stretching process or a casting process, wherein the polyester film is prepared at a temperature of 250-280°C.

11. A film-laminated metal plate, wherein the film-laminated metal plate comprises a metal substrate and the polyester film according to any one of claims 5-9.

12. The film-laminated metal plate according to claim 11, wherein the metal substrate is selected from the group consisting of a chromium-plated steel plate, a tin-plated steel plate, a low-tin steel plate, a galvanized steel plate, a cold-rolled steel plate, a stainless steel plate, and an aluminum plate.

13. The film-laminated metal plate according to claim 11, wherein the metal substrate has a thickness of 0.10-0.50 mm.

14. A method of manufacturing the film-laminated metal plate according to claim 11, wherein the method comprises direct thermal lamination of the polyester film on a surface of the metal substrate by hot melt lamination at a pressure of 2-10 kg and a temperature of 180-260°C.

15. A metal container for medium-end to high-end food or beverage packaging, wherein the metal container is made of the film-laminated metal plate of any one of claims 11-13.

## Patentansprüche

1. Copolyester, wobei der Copolyester ein PET-Polyester ist, der durch Copolymerisierung von Isophthalsäure, 1,4-Cyclohexandimethanol und Neopentylglykol modifiziert ist, und 800-2000 Masse-ppm an Sia2 aufweist, das durch in-situ-Polymerisierung beigegeben wird.

2. Copolyester nach Anspruch 1, wobei der Copolyester einen Schmelzpunkt bei 200-240 °C aufweist.

3. Copolyester nach Anspruch 2, wobei der Copolyester einen Schmelzpunkt bei 210-230 °C aufweist.

4. Copolyester nach Anspruch 1, wobei der Copolyester eine intrinsische Viskosität von 0,68-0,72 dL/g, und/oder eine intrinsische Viskosität von 0,75-0,78 dL/g nach einem Festphasen-Klebrigmachen aufweist.

5. Polyesterfolie, wobei die Polyesterfolie den Copolyester nach Anspruch 1 aufweist.

6. Polyesterfolie nach Anspruch 5, wobei die Polyesterfolie eine einschichtige Struktur ist, die aus einem spezifischen Copolyesterchip hergestellt ist, wobei der spezifische Copolyester 1200 Masse-ppm an Sia2 aufweist, das durch in-situ-Polymerisierung beigegeben wird, wobei der spezifische Copolyester ein PET-Polyester ist, der durch Copolymerisieren von Isophthalsäure, 1,4-Cyclohexandimethanol und Neopentylglykol modifiziert wird.

7. Polyesterfolie nach Anspruch 6, wobei der spezifische Copolyester einen Schmelzpunkt bei 200-240 °C aufweist.

8. Polyesterfolie nach Anspruch 7, wobei der spezifische Copolyester einen Schmelzpunkt bei 210-230 °C aufweist.

9. Polyesterfolie nach Anspruch 6, wobei der spezifische Copolyester eine intrinsische Viskosität von 0,68-0,72 dL/g, und/oder eine intrinsische Viskosität von 0,75-0,78 dL/g nach einem Festphasen-Klebrigmachen aufweist.

10. Verfahren zum Herstellen der Polyesterfolie nach Anspruch 5, wobei das Verfahren ein Herstellen der Polyesterfolie aus dem Copolyester durch einen biaxialen Dehnungsvorgang oder einen Gussvorgang aufweist, wobei die Polyesterfolie bei einer Temperatur von 250-280 °C hergestellt wird.

11. Folienlaminierte Metallplatte, wobei die folienlaminierte Metallplatte ein Metallsubstrat und die Polyesterfolie nach einem der Ansprüche 5-9 aufweist.

12. Folienlaminierte Metallplatte nach Anspruch 11, wobei das Metallsubstrat aus der Gruppe ausgewählt ist, die aus einer chrombeschichteten Stahlplatte, einer zinnbeschichteten Stahlplatte, einer niedrigzinnhaltigen Stahlplatte, einer galvanisierten Stahlplatte, einer kaltgewalzten Stahlplatte, einer Edelstahlplatte, und einer Aluminiumplatte besteht.

13. Folienlaminierte Metallplatte nach Anspruch 11, wobei das Metallsubstrat eine Dicke von 0,10-0,50 mm aufweist.

14. Verfahren zum Herstellen der folienlaminierten Metallplatte nach Anspruch 11, wobei das Verfahren eine direkte thermische Laminierung der Polyesterfolie auf einer Oberfläche des Metallsubstrats durch Heißschmelzlaminierung bei einem Druck von 2-10 kg und einer Temperatur von 180-260 °C aufweist.

15. Metallbehälter für eine mittelwertige oder hochwertige Nahrungsmittel- oder Getränkeverpackung, wobei der Metallbehälter aus der folienlaminierten Metallplatte nach einem der Ansprüche 11-13 hergestellt ist.

## Revendications

1. Copolyester, où le copolyester est un polyester PET modifié par copolymérisation d'acide isophtalique, de 1,4-cyclohexanediméthanol et de néopentylglycol, et comprend 800 à 2000 ppm en masse de SiO2 ajouté par polymérisation in situ.

2. Copolyester selon la revendication 1, où le copolyester a un point de fusion de 200 à 240°C.

3. Copolyester selon la revendication 2, où le copolyester a un point de fusion de 210 à 230°C.

4. Copolyester selon la revendication 1, où le copolyester a une viscosité intrinsèque de 0,68 à 0,72 dL/g, et/ou une viscosité intrinsèque de 0,75 à 0,78 dL/g après tackification en phase solide.

5. Film de polyester, où le film de polyester comprend le copolyester selon la revendication 1.

6. Film de polyester selon la revendication 5, où le film de polyester est une structure monocouche préparée à partir de granulés de copolyester spécifique, où le copolyester spécifique comprend 1200 ppm en masse de SiO2 ajouté par polymérisation in situ, où le copolyester spécifique est un polyester PET modifié par copolymérisation d'acide isophtalique, de 1,4-cyclohexanediméthanol et de néopentylglycol.

7. Film de polyester selon la revendication 6, où le copolyester spécifique a un point de fusion de 200 à 240°C.

8. Film de polyester selon la revendication 7, où le copolyester spécifique a un point de fusion de 210 à 230°C.

9. Film de polyester selon la revendication 6, où le copolyester spécifique a une viscosité intrinsèque de 0,68 à 0,72 dL/g, et/ou une viscosité intrinsèque de 0,75 à 0,78 dL/g après tackification en phase solide.

10. Procédé de préparation du film de polyester selon la revendication 5, où le procédé comprend la préparation du film de polyester à partir du copolyester par un processus d'étirement biaxial ou un processus de coulée, où le film de polyester est préparé à une température de 250 à 280°C.

11. Plaque métallique stratifiée par film, où la plaque métallique stratifiée par film comprend un substrat métallique et le film de polyester selon l'une quelconque des revendications 5 à 9.

12. Plaque métallique stratifiée par film selon la revendication 11, où le substrat métallique est choisi dans le groupe consistant en une plaque d'acier chromée, une plaque d'acier étamée, une plaque d'acier à faible teneur en étain, une plaque d'acier galvanisée, une plaque d'acier laminée à froid, une plaque d'acier inoxydable et une plaque d'aluminium.

13. Plaque métallique stratifiée par film selon la revendication 11, où le substrat métallique a une épaisseur de 0,10 à 0,50 mm.

14. Procédé de fabrication de la plaque métallique stratifiée par film selon la revendication 11, où le procédé comprend la stratification thermique directe du film de polyester sur une surface du substrat métallique par stratification thermofusible à une pression de 2 à 10 kg et une température de 180 à 260°C.

15. Récipient métallique pour emballage d'aliments ou de boissons de milieu de gamme à haut de gamme, où le récipient métallique est constitué de la plaque métallique stratifiée par film selon l'une quelconque des revendications 11 à 13.
